Europäisches Patentamt

European Patent Office

Office européen des brevets

(11) Veröffentlichungsnummer: **0 435 117 A2**

## (12) EUROPÄISCHE PATENTANMELDUNG

(21) Anmeldenummer: 90124301.4

(22) Anmeldetag: 15.12.90

(51) Int. Cl.5: **F16J 15/12**

(30) Priorität: 29.12.89 DE 3943292

(43) Veröffentlichungstag der Anmeldung:
**03.07.91 Patentblatt 91/27**

(84) Benannte Vertragsstaaten:
**DE ES FR GB IT SE**

(71) Anmelder: **Elring Dichtungswerke GmbH**
**Höhenstrasse 24**
**W-7012 Fellbach(DE)**

(72) Erfinder: **Sommer, Horst**

**Wilhelm-Hachtel-Strasse 1**
**W-7022 Musberg(DE)**
Erfinder: **Anhorn, Thomas**
**Huberweg 34**
**W-7433 Dettingen(DE)**
Erfinder: **Kullen, Wilhelm**
**Geranienstrasse 46**
**W-7435 Hülben(DE)**

(74) Vertreter: **Hoeger, Stellrecht & Partner**
**Uhlandstrasse 14 c**
**W-7000 Stuttgart 1(DE)**

(54) **Flachdichtungsplatten für Verbrennungsmotoren und Verfahren zu ihrer Herstellung.**

(57) Platte für Abdichtungs- und/oder Dämm- beziehungsweise Abschirmzwecke, welche zur Erzielung einer widerstandsfähigen Oberfläche und eines guten Zusammenhalts eine Weichstoffschicht, im wesentlichen bestehend aus mineralischen Grundstoffen und einem vulkanisierten Bindemittel, besitzt, auf welche beidseitig Metallfolien aufgeklebt sind. Zur Herstellung solcher Platten werden auf eine Weichstoffschichtbahn beidseitig Metallfolienbahnen aufgeklebt, und die so erzeugte Laminatbahn wird in Platten zerteilt, ohne sie zuvor aufzurollen.

Fig.1

EP 0 435 117 A2

## FLACHDICHTUNGSPLATTEN FÜR VERBRENNUNGSMOTOREN UND VERFAHREN ZU IHRER HERSTELLUNG

Die Erfindung betrifft eine Flachdichtungsplatte für Verbrennungsmotoren, und zwar eine Platte mit einer Weichstoffschicht und einer weiteren metallischen Schicht, wobei die Weichstoffschicht im wesentlichen aus mineralischen Grundstoffen und einem mindestens teilweise vulkanisierten Bindemittel besteht. Insbesondere betrifft die Erfindung eine derartige Platte zur Herstellung von Zylinderkopfdichtungen, aber auch von Auspuffkrümmerdichtungen, Ansaugdichtungen, Dichtungen für die Ölwanne oder den Zylinderkopfdeckel, die Wasser- oder Ölpumpe oder für die Servoaggregate für Bremsen und Lenkung.

Im folgenden soll anhand der Dichtungsplatten für Zylinderkopfdichtungen erläutert werden, welche Wege die Fachwelt bislang beschritten hat:
Am weitesten verbreitet sind Dichtungsplatten, welche ein beidseitig mit einer Weichstoffschicht belegtes Trägerblech aufweisen, mit dem die Weichstoffschichten verklebt und/oder dadurch mechanisch verbunden sind, daß das Trägerblech mit angestanzten und nach beiden Seiten herausgebogenen Zacken versehen ist, die beim Aufwalzen der Weichstoffschichten auf das Trägerblech in den Weichstoff eindringen. Bei dem Weichstoff handelt es sich um ein Gemisch aus zum Beispiel mineralischen Grundstoffen, Fasern, wie Asbestfasern oder organischen Fasern, und einem vulkanisierbaren Bindemittel, welches nach dem Aufwalzen der Weichstoffschichten auf das Trägerblech vulkanisiert wird.

Da der Weichstoff von dem ein Frostschutzmittel enthaltenden Kühlwasser von Verbrennungsmotoren, vom Motorenöl und den Verbrennungsgasen jedoch angegriffen wird, hat man bei Nutzfahrzeugmotoren, aber auch bei PKW-Hochleistungsmotoren schon zu Dichtungsplatten aus einer oder mehreren Metallblechlagen gegriffen, deren Anpassungsfähigkeit an die gegeneinander abzudichtenden Oberflächen von Motorblock und Zylinderkopf jedoch beschränkt ist.

Die Erfinder haben sich die Aufgabe gestellt, eine Platte der eingangs erwähnten Art zu schaffen, welche keine besonders hohen Anforderungen an die Qualität des verwendeten Weichstoffmaterials stellt und dennoch so widerstandsfähig ist, daß sie sich auch zum Beispiel für eine Zylinderkopfdichtung eines Verbrennungsmotors eignet.

Diese Aufgabe läßt sich nun erfindungsgemäß mittels einer Platte der eingangs erwähnten Art lösen, bei der die Weichstoffschicht beidseitig mit einer mit der letzteren verklebten Metallfolie abgedeckt ist. Eine solche Platte hat eine ganze Reihe von Vorteilen: die Weichstoffschicht ist von den Hauptoberflächen der Platte her nicht den abzudichtenden Medien ausgesetzt und dennoch weist die Platte eine
gute Anpassungsfähigkeit an gegeneinander abzudichtende Oberflächen auf; die Platte ist außerordentlich beständig gegen eine Beanspruchung durch Schiebebewegungen der gegeneinander abzudichtenden Teile und bewirkt im Falle einer Zylinderkopfdichtung eine gute Wärmeableitung weg von der Brennraumeinfassung. Da an das Weichstoffmaterial längst nicht so hohe Anforderungen gestellt werden müssen wie bei Dichtungsplatten, bei denen mindestens eine der Hauptoberflächen von einem Weichstoffmaterial gebildet wird, lassen sich bei der Herstellung einer erfindungsgemäßen Platte Weichstoffmaterialien geringerer Qualität verarbeiten; so kommt man bei einer erfindungsgemäßen Platte insbesondere auch ohne Asbestfasern im Weichstoff aus, ja gegebenenfalls sogar ganz ohne Fasern. Soll sich die Platte an gegeneinander abzudichtende Oberflächen anpassen können, dürfen die die Hauptoberflächen der Platte bildenden Metallfolien natürlich keine allzu große Dicke aufweisen, das heißt,die Dicke der Metallfolien hängt von der geforderten Verformbarkeit der Platte ab. Von Zylinderkopfdichtungen wird gefordert, daß sie sich ausbauen lassen, ohne daß Dichtungsplattenmaterial an Motorblock oder Zylinderkopf hängen bleibt; deshalb wurden bekannte Zylinderkopfdichtungen mit besonderen Oberflächenbeschichtungen versehen, um ein Ankleben des Weichstoffs an den gegeneinander abzudichtenden Flächen von Motorblock und Zylinderkopf zu verhindern; es liegt auf der Hand, daß derartige zusätzliche Maßnahmen bei einer Zylinderkopfdichtung, deren Dichtungsplatte von einer erfindungsgemäßen Platte gebildet wird, nicht erforderlich sind.

Besonders vorteilhaft wirkt sich der erfindungsgemäße Plattenaufbau in solchen Fällen aus, in denen Bereiche der Dichtungsplattenoberfläche den abzudichtenden Medien ausgesetzt sind, wie z.B. bei größeren Aussparungen im Motorblock, wo die Zylinderkopfdichtung mit einer kleineren Durchgangsöffnung versehen ist, um damit z.B. den Kühlwasserdurchfluß zu regulieren - die Dichtungsplatte steht dort frei im Kühlwasserstrom und wirkt als Drossel.

Desweiteren kann ein überstehender Bereich z.B. einer erfindungsgemäßen Abgaskrümmerdichtung als Hitzeschild verwendet werden, um z.B. Zündkabel vor unzulässig hohen Temperaturen zu schützen.

Wie bereits erwähnt, kann die Weichstoffschicht einer erfindungsgemäßen Platte völlig faserfrei sein oder nur einen verhältnismäßig kleinen Anteil an organischen Fasern enthalten, weil selbst beim Einsatz einer solchen Platte für Zylinderkopf-dichtungen die Beanspruchung der Weichstoff-schicht eine völlig andere ist als im Falle von Dichtungsplatten mit einem beidseitig mit einer Weichstoffschicht beschichteten Trägerblech. In diesem Zusammenhang sei erwähnt, daß die Herstellung von Platten für die Erzeugung von Flachdichtungen oder wärmedämmenden Platten, deren Weichstoff im wesentlichen aus mineralischen Grundstoffen, einem zumindest teilweise vulkanisierten Bindemittel und einem geringen Anteil an organischen Fasern besteht, aus der DE-PS 31 36 015 bekannt ist. Danach enthält das Weichstoffmaterial mindestens 80% pulverförmige mineralische Grundstoffe, ungefähr 6% eines vulkanisierbaren Bindemittels und im übrigen organische Fasern, wobei der Faseranteil bevorzugt ca. 3% bis ca. 14% beträgt; eine solche Weichstoffzusammensetzung wird auch für die erfindungsgemäße Platte bevorzugt. Zur Herstellung des bekannten Plattenmaterials wird nach dem Stand der Technik wie folgt vorgegangen: eine Trägerblechbahn wird zunächst einseitig mit einem Klebstoff beschichtet, worauf die Trägerblechbahn ein erstes Kalanderwalzenpaar durchläuft, mit dessen Hilfe aus riesel-fähigem Weichstoffmaterial eine erste Weichstoff-schicht auf die mit dem Klebstoff versehene erste Seite der Trägerblechbahn aufgebracht wird. Dann durchläuft die Trägerblechbahn einen Ofen, worauf ihre zweite Seite mit Klebstoff beschichtet wird. Anschließend durchläuft die einseitig mit Weichstoff beschichtete Trägerblechbahn ein zweites Kalanderwalzenpaar, mit dessen Hilfe aus rieselfähi-gem Weichstoffmaterial eine zweite Weichstoff-schicht auf die zweite Seite der Trägerblechbahn aufgebracht wird. Nachdem die beidseitig mit Weichstoff beschichtete Trägerblechbahn einen Ofen durchlaufen hat, wird sie aufgerollt.

Dieses bekannte Herstellungsverfahren soll nun nach der vorliegenden Erfindung so verbessert werden, daß sich nicht nur ein erfindungsgemäß ausgebildetes Plattenmaterial ergibt, sondern daß eine bessere Haftung des Weichstoffs an der betreffenden Metallfolie gewährleistet ist.

Ausgehend von einem Verfahren zur Herstellung einer Platte, bei dem eine Metallfolienbahn ein Kalanderwalzenpaar durchläuft, dessen Walzen mit unterschiedlichen Umfangsgeschwindigkeiten angetrieben werden, wobei auf eine erste Seite der Metallfolienbahn,welche mit einem Klebstoff beschichtet ist, eine Weichstoffschicht aufgebracht wird, indem Weichstoffmaterial zwischen die langsamere Walze und die erste Seite der zwischen das Walzenpaar einlaufenden Metallfolienbahn gegeben wird, läßt sich diese Aufgabe erfindungsgemäß dadurch lösen, daß mittels eines zweiten Walzenpaars auf die von der ersten Metallfolienbahn abgewandte Seite der Weichstoffschicht eine zweite Metallfolienbahn aufgebracht wird, deren der Weichstoffschicht zugekehrte Seite mit einem Klebstoff beschichtet ist, und daß die derart hergestellte Laminatbahn, ohne sie zuvor aufzurollen, in Platten zerteilt wird. Bei dem erfindungsgemäßen Verfahren wird also ein Aufrollen der Laminatbahn ver-mieden, wodurch Verschiebungen der verschiede-nen Schichten der Laminatbahn relativ zueinander und damit Ablöseerscheinungen der Weichstoffschicht von den Metallfolienbahnen vermieden werden.

Bevorzugt wird eine Ausführungsform des erfindungsgemäßen Verfahrens, bei dem dem Kalanderwalzenpaar ein weiteres Kalanderwalzenpaar vorgeordnet ist, dessen Walzen mit unterschiedlicher Umfangsgeschwindigkeit angetrieben werden, und bei dem in einen Einlaufspalt dieses vorgeord-neten Kalanderwalzenpaars rieselfähiges Weich-stoffmaterial gegeben und so auf der schnelleren Walze eine Weichstoffschicht erzeugt wird.

Um eine Walze einzusparen, wird schließlich eine Ausführungsform bevorzugt, bei der die schnellere Walze des vorgeordneten Kalanderwalzenpaars die langsamere Walze desjenigen Kalanderwalzenpaar bildet, durch welches die erste Metallfolienbahn mit der Weichstoffschicht verbunden wird.

Vorallem dann, wenn das Bindemittel der Weichstoffschicht in einem Ofen vulkanisiert wird, in dem das Laminat aus erster Metallfolienbahn und Weichstoffschicht über wenigstens eine Umlenkrolle verläuft, empfiehlt es sich, die zweite Metallfolienbahn erst nach dem Vulkanisieren des Bindemittels auf die Weichstoffschicht aufzubringen, um auf diese Weise Relativverschiebungen der bei-den Metallfolienbahnen und damit Ablöseerschei-nungen zwischen diesen und der Weichstoffschicht zu vermeiden. In jedem Fall ist jedoch eine Umlenkung der Laminatbahn nach dem Vulkanisieren des Bindemittels der Weichstoffschicht zu vermeiden.

Bei einer bevorzugten Ausführungsform der erfindungsgemäßen Platte für Zylinderkopfdichtungen haben die Metallfolien eine maximale Dicke von ca. 0,2 mm; desweiteren beträgt die maximale Dicke der gesamten Platte ca. 2 mm; die Dichte des Weichstoffmaterials liegt zwischen ca. 1,5 und ca. 2 g/cm3 und beträgt vorzugsweise mindestens ca. 1,7 g/cm3. Ferner wird eine ca. 2,5 mm dicke Weichstoffschicht bevorzugt. Als Bindemittel für das Weichstoffmaterial wird Nitrilkautschuk bevorzugt, und als Klebstoff zum Verkleben der Metallfolien mit der Weichstoffschicht ein Nitrilbutadienkautschuk-Phenolharz-Kleber.Für die mineralischen Grundstoffe des Weichstoffmaterials werden die in der DE-PS 31 36 015 erwähnten mineralischen Grundstoffe empfohlen.

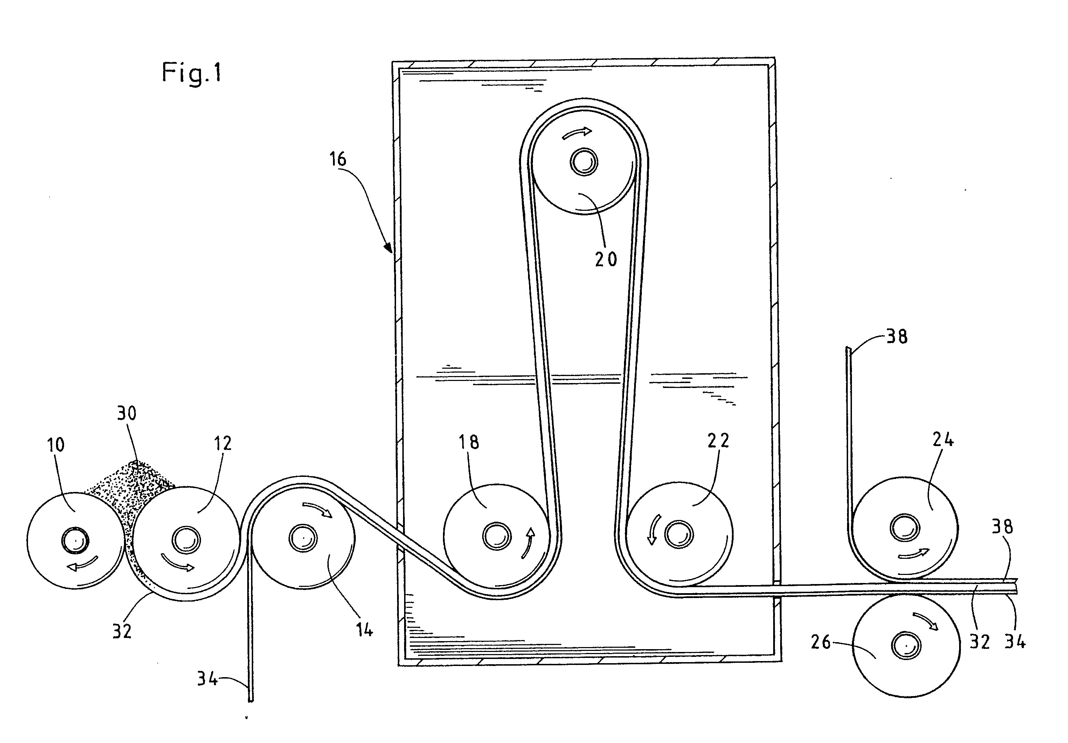

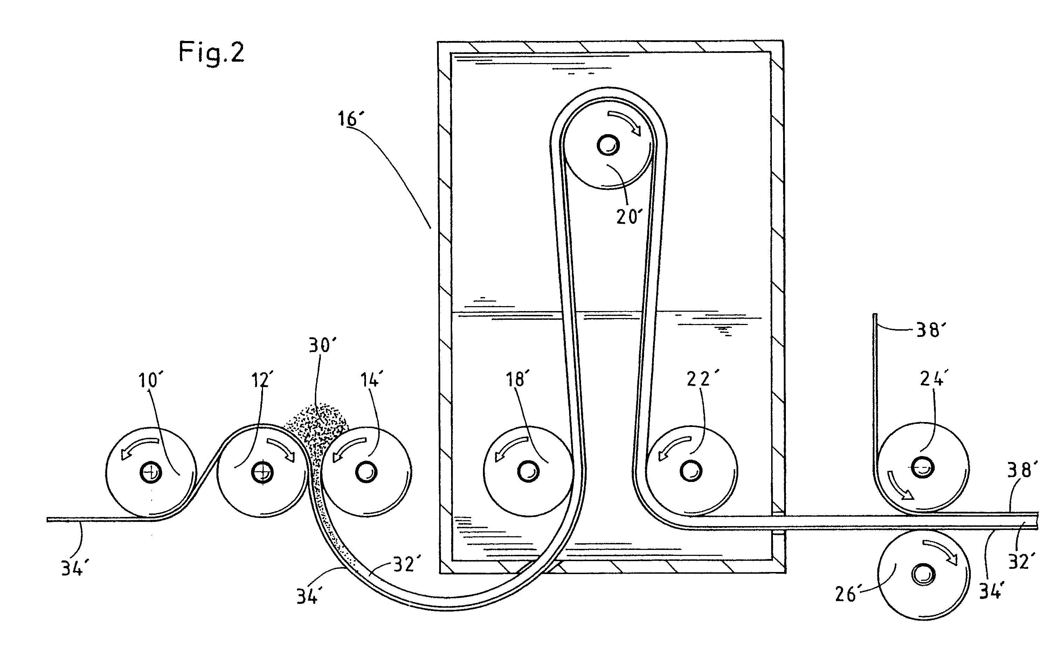

Im folgenden sollen nun anhand der beigefügten Zeichnung zwei bevorzugte Ausführungsformen des Verfahrens beziehungsweise der Anlage zur Herstellung erfindungsgemäßen Plattenmaterials näher erläutert werden; die Zeichnung zeigt in Fig. 1 und in Fig. 2 jeweils einen schematischen Schnitt durch die wesentlichen Teile der betreffenden Anlage.

Die Anlage gemäß Fig. 1 besitzt drei Kalanderwalzen 10, 12 und 14, von denen die erste, nämlich die Walze 10, mit der kleinsten Umfangsgeschwindigkeit angetrieben wird, die Walze 12 mit einer mittleren Umfangsgeschwindigkeit und die Walze 14 mit der größten Umfangsgeschwindigkeit. Im Sinne der Ansprüche bilden die Walzen 10 und 12 ein erstes und die Walzen 12 und 14 ein zweites Kalanderwalzenpaar. Diesen nachgeordnet weist die Anlage einen Ofen 16 auf, in dem drei Umlenkwalzen 18, 20 und 22 angeordnet sind, und dem Ofen nachgeordnet ist schließlich ein Walzenpaar, bestehend aus Walzen 24 und 26, welche mit gleicher Umfangsgeschwindigkeit gegenläufig angetrieben werden. Die Walzen 14, 18, 20, 22, 24 und 26 haben gleiche Umfangsgeschwindigkeit, und der Drehsinn der Walzen ist jeweils durch einen Pfeil angezeigt.

Der Einlaufspalt des Kalanderwalzenpaars 10, 12 wird mit rieselfähigem weichstoffmaterial 30 beschickt, so daß sich aufgrund der größeren Umfangsgeschwindigkeit der Walze 12 auf dieser eine Weichstoffschicht 32 bildet. Eine erste Bahn 34 aus einer glatten Metallfolie, deren gemäß der Zeichnung linke Seite mit einem geeigneten Klebstoff beschichtet ist, läuft zusammen mit der Weichstoffschicht 32 in den Spalt des Kalanderwalzenpaares 12, 14 ein, und aufgrund der höheren Umfangsgeschwindigkeit der Walze 14 im Vergleich zur Walze 12 wird die Weichstoffschicht 32 auf die Metallfolienbahn übertragen. Im Ofen 16 wird das Bindemittel des Weichstoffmaterials teilweise vulkanisiert und die Weichstoffschicht 12 fest mit der ersten Metallfolienbahn 34 verbunden.

Schließlich läuft das Laminat aus erster Metallfolienbahn 34 und Weichstoffschicht 32 zwischen den Walzen 24 und 26 hindurch, durch die eine zweite Bahn 38 aus einer glatten Metallfolie, deren gemäß der Zeichnung linke Seite mit einem geeigneten Klebstoff beschichtet ist, auf die Weichstoffschicht 32 aufgepreßt und mit dieser fest verbunden wird.

Schließlich wird die Laminatbahn 34, 32, 38, ohne zuvor aufgerollt zu werden, in geeignete Platten zerteilt.

Bei der Anlage gemäß Fig. 2 wurden die der Anlage gemäß Fig. 1 entsprechenden Teile mit denselben Bezugzeichen versehen wie in Fig. 1, jedoch unter Hinzufügung eines Strichs.

Bei der Anlage gemäß Fig. 2 werden erfindungsgemäß zwei erste Walzen 10' und 12' mit derselben Umfangsgeschwindigkeit, jedoch unterschiedlichen Drehrichtungen angetrieben, so daß zwischen ihnen eine erste Metallfolienbahn 34' hindurchgeführt und durch die Walzen vorgeschoben werden kann. Die in Laufrichtung gesehene linke Seite der Metallfolienbahn 34' ist mit einem geeigneten Klebstoff beschichtet. Der Einlaufspalt des Walzenpaars 12', 14' wird mit rieselfähigem Weichstoffmaterial 30' beschickt, und da die Walze 14' mit geringerer Umfangsgeschwindigkeit angetrieben wird als die Walze 12', bleibt die zwischen den Walzen 12' und 14' gebildete weichstoffschicht 32' an der Metallfolienbahn 34' haften, welche den Walzenspalt mit der Umfangsgeschwindigkeit der schnelleren Walze 12' durchläuft.

Anschließend durchläuft das Laminat 32', 34' einen Ofen 16', in dem wieder drei Umlenkwalzen 18', 20' und 22' angeordnet sind. Über diese verläuft das Laminat 32', 34' derart, daß es durch die angetriebenen Walzen 18', 20', 22' zwangsgefördert wird, so daß es zwischen den Walzen 14' und 18' zugfrei bleiben kann. Dies ist von besonderem Vorteil, da dadurch die bei der Anlage nach Fig. 1 gegebene Situation vermieden wird, wo auf der Walze 14 zwischen der fertig ausgebildeten Weichstoffschicht 32 und der Metallfolienbahn 34 Scherkräfte auftreten, weil die Walze 14 mit größerer Umfangsgeschwindigkeit angetrieben wird als die Walze 12; derartige Scherkräfte wirken sich aber auf die Haftung zwischen Weichstoffschicht und Metallfolienbahn nachteilig aus.

Die Funktion des Walzenpaars 24', 26' und der zweiten Metallfolienbahn 38' entspricht dann wieder derjenigen der entsprechenden Teile der Anlage gemäß Fig. 1.

## Ansprüche

1. Flachdichtungsplatte für Verbrennungsmotoren, welche eine Weichstoffschicht und eine weitere metallische Schicht aufweist, wobei die Weichstoffschicht im wesentlichen aus mineralischen Grundstoffen und einem zumindest teilweise vulkanisierten Bindemittel besteht, dadurch gekennzeichnet, daß die Weichstoffschicht (32) beidseitig mit einer Metallfolie (34, 38) abgedeckt ist und daß die Metallfolien (34, 38) mit der Weichstoffschicht (32) verklebt sind.

2. Platte nach Anspruch 1, dadurch gekennzeichnet, daß die Weichstoffschicht (32) faserfrei ist.

3. Platte nach Anspruch 1, dadurch gekennzeichnet, daß die Weichstoffschicht als Fasern ausschließlich Fasern aus einem organischen Material, insbesondere Aramidfasern, enthält.

4. Platte nach einem oder mehreren der Ansprüche 1 bis 3, dadurch gekennzeichnet, daß die Metallfolie (34, 38) eine glatte Folie ist.

5. Platte nach einem oder mehreren der Ansprüche 1 bis 4, dadurch gekennzeichnet, daß die Dicke der Metallfolie (34, 38) ca. 0,2 mm beträgt.

6. Platte nach einem oder mehreren der Ansprüche 1 bis 5, dadurch gekennzeichnet, daß die Dicke der Weichstoffschicht (32) kleiner als ca. 2,5 mm ist.

7. Platte nach einem oder mehreren der Ansprüche 1 bis 6, dadurch gekennzeichnet, daß die Dichte der Weichstoffschicht (32) ca. 1,5 bis 2 g/cm³ beträgt.

8. Platte nach Anspruch 7, dadurch gekennzeichnet, daß die Dichte der Weichstoffschicht (32) mindestens ca. 1,7 g/cm³ beträgt.

9. Platte nach einem oder mehreren der Ansprüche 1 bis 8, dadurch gekennzeichnet, daß die Dicke der Platte ca. 2 mm beträgt.

10. Verfahren zur Herstellung von Platten nach einem oder mehreren der Ansprüche 1 bis 9, bei dem eine Metallfolienbahn ein Kalanderwalzenpaar durchläuft, dessen Walzen mit unterschiedlichen Umfangsgeschwindigkeiten angetrieben werden, wobei auf eine erste Seite der Metallfolienbahn, welche mit einem Klebstoff beschichtet ist, eine Weichstoffschicht aufgebracht wird, indem Weichstoffmaterial zwischen die langsamere Walze und die erste Seite der zwischen das Walzenpaar einlaufenden Metallfolienbahn gegeben wird, dadurch gekennzeichnet, daß mittels eines zweiten Walzenpaars auf die von der ersten Metallfolienbahn abgewandte Seite der Weichstoffschicht eine zweite Metallfolienbahn aufgebracht wird, deren der Weichstoffschicht zugekehrte Seite mit einem Klebstoff beschichtet ist, und daß die derart hergestellte Laminatbahn, ohne sie zuvor aufzurollen, in Platten zerteilt wird.

11. Verfahren nach Anspruch 10, dadurch gekennzeichnet, daß dem Kalanderwalzenpaar ein weiteres Kalanderwalzenpaar vorgeordnet ist, dessen Walzen mit unterschiedlicher Umfangsgeschwindigkeit angetrieben werden, und daß in einem Einlaufspalt dieses vorgeordneten Kalanderwalzenpaars rieselfähiges Weichstoffmaterial gegeben und so auf der schnelleren Walze eine Weichstoffschicht erzeugt wird.

12. Verfahren nach Anspruch 11, dadurch gekennzeichnet, daß die schnellere Walze des vorgeordneten Kalanderwalzenpaars die langsamere Walze des Kalanderwalzenpaars bildet, durch welches die erste Metallfolienbahnmit der Weichstoffschicht verbunden wird.

13. verfahren nach einem oder mehreren der Ansprüche 10 bis 12, dadurch gekennzeichnet, daß die zweite Metallfolienbahn erst nach dem vulkanisieren des Bindemittels auf die weichstoffschicht aufgebracht wird.

Fig.1

EP 0 435 117 A2

Fig.2

EP 0 435 117 A2